# EUROPEAN PATENT APPLICATION

(11) **EP 4 821 654 A1**
(43) Date of publication of application: **14.10.2026**
(21) Application number: 24900458.1
(22) Date of filing: 22.11.2024
(51) Int. Cl.: B29C 43/32, B29C 43/24, B29C 43/46, B29C 55/18, B65H 5/06, B65H 5/22

(54) **COMPRESSED POWDER SHEET CONVEYANCE DEVICE**

(30) Priority: 05.12.2023 JP 2023205405
(71) Applicant: Panasonic Intellectual Property Management Co., Ltd., Kadoma-shi, Osaka 571-0057 (JP)
(72) Inventor: ORIO, Akira, kadoma-shi, Osaka 571-0057 (JP); MAEDA, Satoru, kadoma-shi, Osaka 571-0057 (JP); TAKAYAMA, Yosuke, kadoma-shi, Osaka 571-0057 (JP); TANI, Hitoshi, kadoma-shi, Osaka 571-0057 (JP)
(74) Representative: Eisenführ Speiser
(86) International application number: PCT/JP2024/041453
(87) International publication number: WO 2025/121163

(57) **Abstract**

A compressed powder sheet conveyance device 1 comprises: a conveyance roll 2 that supports and conveys, on a circumferential surface thereof, a compressed powder sheet S in which a powder P has been compressed into a sheet shape; and a gas flow unit 4 that blows a gas G toward the compressed powder sheet S on the circumferential surface.

## Description

### TECHNICAL FIELD

This present disclosure relates to a compacted powder sheet conveyor apparatus.

### BACKGROUND ART

Patent literature 1 describes a multi-roll system used to manufacture dry electrodes. The system is equipped with a plurality of rolls arranged in a row, the powder hopper feeds a dry electrode compound from a powder hopper to a gap between a pair of rolls to mold a compound sheet, and the compound sheet thus molded is conveyed while being supported on the circumferential surface of each roll.

### RELATED-ART LITERATURE

### PATENT LITERATURE

Patent Literature 1: US2020/0227722

### SUMMARY OF INVENTION

### TECHNICAL PROBLEM

When a compacted powder sheet with a compacted powder, not limited to the compound sheet, is supported and conveyed on the circumferential surface of the roll, the compacted powder sheet may peel off from the circumferential surface of the roll. In particular, the leading end of the sheet easily peels off from the circumferential surface. When the leading end of the compacted powder sheet peels off from the circumferential surface of the roll, the compacted powder sheet with the leading end bent may enter a gap between a pair of rolls. In this case, the compacted powder sheet thicker than assumed will enter the gap between the rolls, which may apply an excessive load on the roll.

This present disclosure addresses the issue described above, and a purpose thereof is to provide a technology to suppress the bending of a compacted powder sheet during conveyance.

### SOLUTION TO PROBLEM

An embodiment of the present disclosure relates to a compacted powder sheet conveyor apparatus. The apparatus includes: a conveyance roll that supports and conveys, on a circumferential surface of the conveyance roll, a compacted powder sheet in which a powder is compacted into a sheet shape; and a gas flow unit that sprays a gas onto the compacted powder sheet on the circumferential surface.

Optional combinations of the aforementioned constituting elements, and implementations of the present disclosure in the form of methods, apparatuses, and systems may also be practiced as additional modes of the present disclosure.

### ADVANTAGEOUS EFFECTS OF INVENTION

According to the present disclosure, it is possible to suppress the bending of a compacted powder sheet during conveyance.

### BRIEF DESCRIPTION OF DRAWINGS

[Fig. 1] Fig. 1 schematically shows a compacted powder sheet conveyor apparatus according to the embodiment.
[Fig. 2] Fig. 2A and Fig. 2B schematically show a state in which the compacted powder sheet has peeled off from the circumferential surface of the conveyance roll.

### DESCRIPTION OF EMBODIMENTS

Hereinafter, the present disclosure will be described based on a preferred embodiment with reference to the accompanying drawings. The embodiment is not intended to limit the scope of the present disclosure but exemplify the present disclosure. Not all of the features and the combinations thereof described in the embodiment are necessarily essential to the present disclosure. Identical or like constituting elements, members, processes shown in the drawings are represented by identical symbols and a duplicate description will be omitted as appropriate. The scales and shapes of the parts shown in the figures are defined for convenience's sake to make the explanation easy and shall not be interpreted limitatively unless otherwise specified. Terms like "first", "second", etc. used in the specification and claims do not indicate an order or importance by any means unless specified otherwise and are used to distinguish a certain feature from the others. Those of the members that are not material to the description of the embodiments are omitted in the drawings.

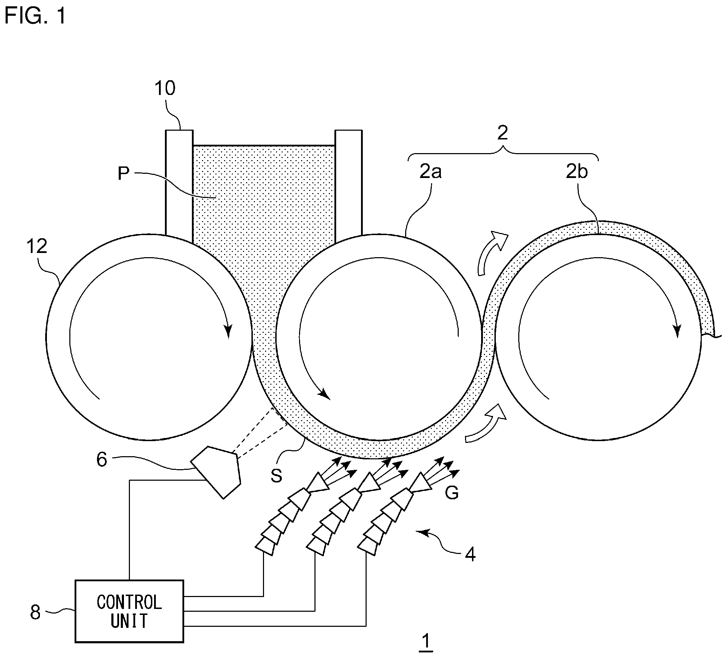

Fig. 1 schematically shows a compacted powder sheet conveyor apparatus 1 according to the embodiment. In Fig. 1, some of the constituting elements of the compacted powder sheet conveyor apparatus 1 are depicted as functional blocks. The functional blocks may be implemented by an element such as a CPU or memory of a computer or by a circuit as a hardware configuration, and by a computer program or the like as a software configuration. It will be understood by those skilled in the art that these functional blocks may be implemented in a variety of forms by combinations of hardware and software.

The compacted powder sheet conveyor apparatus 1 is equipped with a conveyance roll 2, a gas flow unit 4, a sensor 6, a control unit 8, a reservoir 10, and a molding roll 12. The compacted powder sheet conveyor apparatus 1 of the embodiment has a plurality of conveyance rolls 2 arranged in the horizontal direction by way of example. Fig. 1 shows two conveyance rolls 2 adjacent to each other. Hereinafter, the upstream conveyance roll 2 in the conveying direction of the compacted powder sheet S will be defined as the first conveyance roll 2a, and the downstream conveyance roll 2 is defined as the second conveyance roll 2b. The number of conveyance rolls 2 is not limited.

The reservoir 10 has a publicly known structure such as a combination of a hopper and a feeder and stores a powder P, which is the source material of the compacted powder sheet S. The powder P contains predetermined particles and a binder component that binds particles together. The binder component includes at least one of a publicly known binding agent (also called a binder) or a solvent. The powder P by way of example is such that the amount of the binder component, i.e., the sum of the binder content and the solvent content, is 10% by mass or less, or 5% by mass or less, or 3% by mass or less, or 1% by mass or less, or 0.1% by mass or less, or substantially 0% with respect to the total mass of the powder P. In essence, the powder P by way of example is a dry powder. The powder P may be a wet powder in which the amount of the binder component is more than 10% by mass with respect to the total mass of the powder P.

By way of example, the powder P is an electrode compound, and the compacted powder sheet S is a compound sheet. In this case, the powder P includes an electrode active material as predetermined particles and also includes a conductive agent as necessary. In the case of a general lithium ion secondary battery, the electrode active material is lithium cobalt oxide, lithium iron phosphate, etc. in the case of a positive electrode and is graphite, etc. in the case of a negative electrode. The conductive agent is graphite, carbon black, acetylene black, etc. The binder is polytetrafluoroethylene (PTFE), polyvinylidene fluoride (PVdF), etc. In the case the electrode compound is used for the negative electrode, the solvent is exemplified by water; alcohols such as ethanol; N-methylpyrrolidone (NMP); toluene; dimethyl carbonate (DMC), ethyl methylcarbonate (EMC), etc. In the case the electrode compound is used for the positive electrode, the solvent is exemplified by amine-based solvent such as N, N-dimethylaminopropylamine, diethylenetriamine, etc.; ether-based solvent such as tetrahydrofuran; ketone-based solvent such as methyl ethyl ketone; ester-based solvent such as methyl acetate; amide-based solvent such as dimethylacetamide and N-methyl-2-pyrrolidone, etc. The powder P and the compacted powder sheet S may be used for applications other than electrodes.

A molding roll 12 and a first conveyance roll 2a are provided at the powder outlet of the reservoir 10. The molding roll 12 and the first conveyance roll 2a are oriented such that the respective rotation axes are parallel to each other, and the rolls are adjacent to each other at a predetermined interval. The first conveyance roll 2a is provided further downstream in the conveying direction of the compacted powder sheet S than the molding roll 12. The powder P is supplied from the reservoir 10 to a gap between the molding roll 12 and the first conveyance roll 2a. The molding roll 12 and the first conveyance roll 2a of the embodiment also function as feed rolls and carry the powder P in the reservoir 10 on the circumferential surfaces thereof to supply the powder P to a gap between the two rolls.

The molding roll 12 and the first conveyance roll 2a rotate in mutually opposite directions and compact the powder P supplied to the gap into a sheet shape. Thereby, the compacted powder sheet S is molded. Therefore, the first conveyance roll 2a of the embodiment also serves as a molding roll. The compacted powder sheet S is continuously fed from the gap between the molding roll 12 and the first conveyance roll 2a. Therefore, the compacted powder sheet S is a strip elongated in the conveying direction. The compacted powder sheet S is conveyed to the downstream side while being supported on the circumferential surface of the first conveyance roll 2a.

The second conveyance roll 2b is provided downstream of the first conveyance roll 2a. The first conveyance roll 2a and the second conveyance roll 2b are oriented such that the respective rotation axes are parallel to each other, and the rolls are adjacent to each other at a predetermined interval. The compacted powder sheet S is supported and conveyed by the circumferential surface of the first conveyance roll 2a and is fed to a gap between the first conveyance roll 2a and the second conveyance roll 2b. The first conveyance roll 2a and the second conveyance roll 2b can convey the compacted powder sheet S downstream by sandwiching the compacted powder sheet S between the rolls and rotating in mutually opposite directions. The compacted powder sheet S is delivered to the side of the second conveyance roll 2b at a position where the first conveyance roll 2a and the second conveyance roll 2b face each other. The compacted powder sheet S is then supported on the circumferential surface of the second conveyance roll 2b and conveyed to the downstream side.

The conveyance roll 2 of the embodiment also functions as a stretching roll. In other words, the first conveyance roll 2a and the second conveyance roll 2b rotate at mutually different circumferential speeds. Specifically, the rotation speed of the second conveyance roll 2b is higher than the rotation speed of the first conveyance roll 2a. This can convey the compacted powder sheet S and also stretch the compacted powder sheet S by a difference between mutual circumferential speeds. Therefore, the thickness of the compacted powder sheet S located on the circumferential surface of the second conveyance roll 2b is smaller than the thickness of the compacted powder sheet S located on the circumferential surface of the first conveyance roll 2a.

Configuring the surface roughness of the circumferential surface of the second conveyance roll 2b to be greater than the surface roughness of the circumferential surface of the first conveyance roll 2a, instead of or in addition to providing a circumferential speed difference between the first conveyance roll 2a and the second conveyance roll 2b, can also stretch the compacted powder sheet S. "Surface roughness" in the embodiment is the arithmetic average roughness Ra defined in JISB06012001. However, surface roughness is not limited to Ra and may be any other known index such as maximum height roughness Rz. Further, the compacted powder sheet S can also be stretched by configuring the gap between the first conveyance roll 2a and the second conveyance roll 2b to be smaller than the thickness of the incoming compacted powder sheet S.

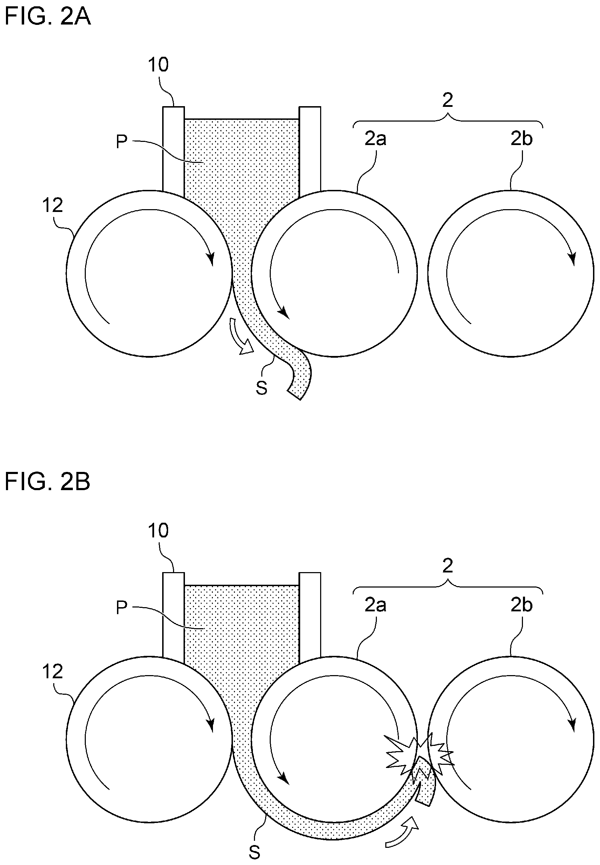

Fig. 2A and Fig. 2B schematically show a state in which the compacted powder sheet S has peeled off from the circumferential surface of the conveyance roll 2. The first conveyance roll 2a supports and conveys the compacted powder sheet S in a portion on the circumferential surface that faces vertically downward. On the circumferential surface that faces vertically downward, the compacted powder sheet S is pulled downward by its own weight. For this reason, the compacted powder sheet S easily peels off on the first conveyance roll 2a. In particular, as shown in Fig. 2A, the leading end of the compacted powder sheet S easily peels off from the circumferential surface.

Further, the molding roll 12 and the first conveyance roll 2a are likely to undergo a large load when the supply of the powder P to the gap between the molding roll 12 and the first conveyance roll 2a is started and when the powder P arrives at the gap. The force applied to each roll when the powder P enters the gap between the two rolls is often greater than the force exerted when the compacted powder sheet S enters the gap between the two rolls. When a large load is applied to the molding roll 12 and the first conveyance roll 2a, the adhesion of the compacted powder sheet S to the circumferential surface of the first conveyance roll 2a may be inhibited by the impact. For this reason, the leading end of the compacted powder sheet S peels off particularly easily in the first conveyance roll 2a, which also serves as a molding roll.

When the compacted powder sheet S with the leading end peeled off from the circumferential surface of the first conveyance roll 2a is conveyed to the gap between the first conveyance roll 2a and the second conveyance roll 2b, the compacted powder sheet S can enter the gap in a bent state, as shown in Fig. 2B. In this case, the compacted powder sheet S thicker than assumed will enter the gap, which may apply an excessive load on the first conveyance roll 2a and the second conveyance roll 2b. As a result, the compacted powder sheet conveyor apparatus 1 or the compacted powder sheet S may be damaged.

In the compacted powder sheet conveyor apparatus 1 according to the embodiment, therefore, a gas flow unit 4 is provided for the first conveyance roll 2a as shown in Fig. 1. The gas flow unit 4 sprays a gas G onto the compacted powder sheet S on the circumferential surface of the first conveyance roll 2a. The gas flow unit 4 can be comprised of a known blower, etc. The gas G is, for example, an atmospheric gas such as air. The orientation of the blow outlet for the gas G in the gas flow unit 4 is preferably at least perpendicular to an area on the circumferential surface of the first conveyance roll 2a facing the blow outlet. It is more preferable that the blow outlet is at an acute angle with respect to the conveying direction of the compacted powder sheet S in that area, i.e., that the blowing direction is aligned with the conveying direction.

The compacted powder sheet S can be pressed against the circumferential surface by spraying the gas G from the gas flow unit 4 onto the compacted powder sheet S on the circumferential surface of the first conveyance roll 2a. This suppresses the peel-off of the compacted powder sheet S from the circumferential surface and inhibits the compacted powder sheet S from entering the gap between the first conveyance roll 2a and the second conveyance roll 2b in a bent state.

The gas flow unit 4 may be provided for the conveyance roll 2 other than the first conveyance roll 2a. In this case, it is preferable that the gas flow unit 4 is provided for the conveyance roll 2 that supports the compacted powder sheet S in a portion on the circumferential surface that faces vertically downward, but the gas flow unit 4 may be provided for the conveyance roll 2 like the second conveyance roll 2b that supports the compacted powder sheet S in a portion that faces vertically upward.

In the compacted powder sheet conveyor apparatus 1, the sensor 6 is provided in the vicinity of the gas flow unit 4, and the sensor 6 detects the peel-off of the compacted powder sheet S from the circumferential surface of the first conveyance roll 2a. The sensor 6 can be comprised of a publicly known displacement sensor, etc. The sensor 6 can detect the displacement of the compacted powder sheet S by measuring a distance from itself to the compacted powder sheet S. The sensor 6 sends a signal indicating a detection result to the control unit 8.

The control unit 8 controls the spraying of the gas G by the gas flow unit 4 according to the detection result of the sensor 6. The control unit 8 may be comprised of a digital processor and can be comprised of, for example, a combination of a microcontroller, including a CPU, and a software program. The control unit 8 may be comprised of an FPGA (Field Programmable Gate Array) or an ASIC (Application Specified IC).

For example, the control unit 8 holds a threshold value of the amount of displacement of the compacted powder sheet S in advance. The threshold value can be set as appropriate based on the designer's empirical knowledge or experiments and simulations performed by the designer. For example, the threshold value is not more than twice the thickness of the compacted powder sheet S assumed at the measurement position of the sensor 6. The control unit 8 controls the gas flow unit 4 to blow the gas G when the amount of displacement of the compacted powder sheet S exceeds the threshold value. This makes it possible to suppress dust scattering and wasteful power consumption compared to the case of continuously blowing the gas G from the gas flow unit 4 regardless of the state of the compacted powder sheet S.

The configuration of the compacted powder sheet conveyor apparatus 1 can be changed as appropriate. For example, the compacted powder sheet conveyor apparatus 1 may have a thickness sensor that measures the thickness of the compacted powder sheet S on the circumferential surface of the first conveyance roll 2a and a displacement mechanism that changes the interval between the first conveyance roll 2a and the second conveyance roll 2b. The detection result of the thickness sensor is sent to the control unit 8. The control unit 8 controls the displacement mechanism to widen the gap between the first conveyance roll 2a and the second conveyance roll 2b when the thickness of the compacted powder sheet S exceeds an assumed value. This suppresses an excessive load on the first conveyance roll 2a and the second conveyance roll 2b when the compound powder sheet S enters the gap.

Further, the control unit 8 may control the rotation of the second conveyance roll 2b to increase the circumferential speed of the second conveyance roll 2b when the thickness of the compacted powder sheet S exceeds the assumed value. This can apply a stronger shear force to the compacted powder sheet S entering the gap and can suppress an excessive load applied to the first conveyance roll 2a and the second conveyance roll 2b. It can also stretch the compacted powder sheet S further and bring the thickness of the compacted powder sheet S closer to the assumed value. Alternatively, the thickness sensor and the displacement mechanism may be provided for other conveyance rolls 2. The roll for which the circumferential speed is adjusted is not limited to the second conveyance roll 2b, either.

Also, the direction of arrangement of the conveyance rolls 2 is not particularly limited. For example, the first conveyance roll 2a and the second conveyance roll 2b may be arranged in a vertical direction or a diagonal direction. Further, one or more conveyance rolls 2 may further be arranged on the downstream side of the second conveyance roll 2b. Further, a lamination roll may be arranged to be adjacent to the most downstream conveyance roll 2. In this case, the compacted powder sheet S can be laminated on a sheet member such as the current collector plate conveyed by the lamination roll.

As explained above, the compacted powder sheet conveyor apparatus 1 according to the embodiment is equipped with a conveyance roll 2 that supports and conveys the compacted powder sheet S on the circumferential surface and a gas flow unit 4 that sprays a gas G onto the compacted powder sheet S on the circumferential surface. This suppresses the bending of the compacted powder sheet S during conveyance. Therefore, it is possible to avoid entry of the compacted powder sheet S with a thickness greater than assumed in the gap between the rolls to apply an excessive load on the rolls. When the powder P is a dry powder, in particular, the compacted powder sheet S easily peels off from the circumferential surface of the conveyance roll 2. For this reason, the compacted powder sheet conveyor apparatus 1 according to embodiment can function particularly effectively when the powder P is a dry powder.

Further, the compacted powder sheet conveyor apparatus 1 is equipped with a sensor 6 that detects the peeling of the compacted powder sheet S from the circumferential surface and a control unit 8 that controls the gas flow unit 4 according to the detection result of sensor 6. This can suppress the wasteful spraying of the gas G onto the compacted powder sheet S.

Further, the gas flow unit 4 is arranged for the first conveyance roll 2a that also serves as the molding roll. Further, the gas flow unit 4 is arranged for the first conveyance roll 2a that supports the compacted powder sheet S in a portion on the circumferential surface that faces vertically downward. These measures allow for more reliable suppression of the peeling of the compacted powder sheet S from the circumferential surface and the resulting bending of the compacted powder sheet S.

The embodiment of the present disclosure has been described above in detail. The embodiment described above is merely a specific example of practicing the present disclosure. The details of the embodiment shall not be construed as limiting the technical scope of the present disclosure. A number of design modifications such as modification, addition, deletion, etc. of constituting elements may be made to the extent that they do not depart from the idea of the present disclosure defined by the claims. New embodiments with design modifications will provide the combined advantages of the embodiment and the variation. Although the details subject to such design modification are emphasized in the embodiment by using phrases such as "of the embodiment" and "in the embodiment", details not referred to as such are also subject to design modification. Any combination of constituting elements included in the embodiment is also useful as an embodiment of the present disclosure. Hatching in the cross section in the drawings should not be construed as limiting the material of the hatched object.

The embodiments may be defined by the following items.
[Item 1] A compacted powder sheet conveyor apparatus (1) including:
   a conveyance roll (2) that supports and conveys, on a circumferential surface of the conveyance roll (2), a compacted powder sheet (S) in which a powder (P) is compacted into a sheet shape; and
   a gas flow unit (4) that sprays a gas (G) onto the compacted powder sheet (S) on the circumferential surface.
[Item 2] The compacted powder sheet conveyor apparatus (1) according to Item 1, further including:
   a sensor (6) that detects peeling of the compacted powder sheet (S) from the circumferential surface; and
   a control unit (8) that controls spraying of the gas (G) by the gas flow unit (4) according to a detection result of the sensor (6).
[Item 3] The compacted powder sheet conveyor apparatus (1) according to Item 1 or Item 2,
   wherein the conveyance roll (2a) also serves as a molding roll that molds the compacted powder sheet (S) by compacting the powder (P).
[Item 4] The compacted powder sheet conveyor apparatus (1) according to any one of Item 1 through Item 3,
   wherein the conveyance roll (2a) supports the compacted powder sheet (S) in a portion on the circumferential surface that faces vertically downward.

### INDUSTRIAL APPLICABILITY

The present disclosure can be used in powder compact conveyor apparatus.

### REFERENCE SIGNS LIST

1 compacted powder sheet conveyor apparatus, 2 conveyance roll, 2a first conveyance roll, 2b second conveyance roll, 4 gas flow unit, 6 sensor, 8 control unit, 12 molding roll

## Claims

1. A compacted powder sheet conveyor apparatus comprising:
a conveyance roll that supports and conveys, on a circumferential surface of the conveyance roll, a compacted powder sheet in which a powder is compacted into a sheet shape; and
a gas flow unit that sprays a gas onto the compacted powder sheet on the circumferential surface.

2. The compacted powder sheet conveyor apparatus according to Claim 1, further comprising:
a sensor that detects peeling of the compacted powder sheet from the circumferential surface; and
a control unit that controls spraying of the gas by the gas flow unit according to a detection result of the sensor.

3. The compacted powder sheet conveyor apparatus according to Claim 1 or 2,
wherein the conveyance roll also serves as a molding roll that molds the compacted powder sheet by compacting the powder.

4. The compacted powder sheet conveyor apparatus according to Claim 1 or 2,
wherein the conveyance roll supports the compacted powder sheet in a portion on the circumferential surface that faces vertically downward.
